# EUROPÄISCHE PATENTSCHRIFT

(11) **EP 1 421 292 B1**
(45) Veröffentlichungstag und Bekanntmachung des Hinweises auf die Patenterteilung: **12.12.2007**
(21) Anmeldenummer: 02735409.1
(22) Anmeldetag: 07.06.2002
(51) Int. Cl.: F16D 65/12

(54) **BREMSSCHEIBE**
BRAKE DISC
DISQUE DE FREIN

(30) Priorität: 31.08.2001 DE 10142806
(43) Veröffentlichungstag der Anmeldung: 26.05.2004
(73) Patentinhaber: AUDI AG, 85045 Ingolstadt (DE)
(72) Erfinder: SAAME, Christoph, 85080 Gaimersheim (DE); YAZDIRAD, Kamjar, 85055 Ingolstadt (DE); BAUER, Johann, 85051 Ingolstadt (DE)
(86) Internationale Anmeldenummer: PCT/EP2002/006241
(87) Internationale Veröffentlichungsnummer: WO 2003/019032

(56) Entgegenhaltungen:
- EP-A- 1 091 137
- DE-A- 3 902 657
- DE-A- 10 000 915

## Beschreibung

Die Erfindung bezieht sich auf eine Bremsscheibe für eine Scheibenbremse, insbesondere in Kraftfahrzeugen, gemäß dem Oberbegriff des Patentanspruches 1.

Eine derartige Bremsscheibe zeigt beispielsweise die DE 33 15 122 A1. Dabei ist die Bremsscheibe aus mehreren Ringsegmenten zusammengesetzt, die sich jeweils im Stoßbereich überlappen und mittels eines Haltebolzens miteinander verbunden sind.

DE-A-100 00 918 zeigt eine Bremsvorrichtung, wobei der Bremsscheiben-stator mit einem Bremsbelag versehen ist, der umfänglich einem Stützring fixiert ist. Am Außenumfang des Stützringes sind lotrecht verteilt mehrere ineinander beabstandete Stützen angeordnet, zwischen denen stets ein plattenartiges Bremssegment positionert ist.

Aufgabe der Erfindung ist es, die gattungsgemäße Bremsscheibe derart weiterzubilden, dass sie fertigungstechnisch einfacher und insbesondere im Stoßbereich der Ringsegmente leichter und damit temperaturunempfindlicher ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Ringsegmente im Stoßbereich jeweils hälftig radial verlaufende Haltebolzen umschließen, dass die Haltebolzen in Umfangsabschnitten des Tragteils befestigt sind, und dass die Haltebolzen in Zentrifugalrichtung die Ringsegmente formschlüssig abstützen. Insbesondere wenn die Haltebolzen dabei rohrförmig ausgebildet sind, resultiert eine leichte und dennoch robuste Konstruktion, die zudem Temperaturunterschiede und damit verbundene Wärmespannungen hervorragend ausgleicht. Die Haltebolzen können im fertigungstechnisch einfacher Weise durch formschlüssig wirkende Sicherungsmittel gehalten sein, wobei insbesondere bei der Verwendung von zwischengeschalteten Federn in Form von kurzen Schraubendruckfeder oder Tellerfedern temperaturbedingte Materialspannungen besonders günstig ausgeglichen und ein Verzug der Bremsscheibe auch bei hohen Temperaturbelastungen zuverlässig vermeidbar ist.

Bei innenbelüfteten Bremsscheiben ergibt sich aufgrund der erfindungsgemäßen Konfiguration jeweils ein baulich gedrängter Stoßbereich der Ringsegmente, wodurch eine größere Anzahl von Kühlkanälen ausführbar ist, wobei zudem aufgrund der rohrförmigen Gestaltung der Haltebolzen diese ebenfalls einen Kühlkanal bilden. In Verbindung mit einem zwischen den Umfangsabschnitten des Tragteils und den Ringsegmenten des Reibrings angeordneten, ringförmigen Lüftungsspalt ergibt sich eine hervorragende Kühlung der Bremsscheibe bei gleichmäßiger Temperaturableitung.

Insbesondere bei Haltebolzen aus Stahl kann es vorteilhaft sein, diese zur Vermeidung von Korrosion und/oder zur Optimierung der Reibung mit einer Beschichtung zu versehen. Besonders vorteilhaft kann die Beschichtung z. B. aus Zᵣ₂O₅ im PVD- oder CVD-Verfahren aufgebracht werden. Diese Beschichtungen sind besonders temperatur- und verschleißfest.

Bei einer Bremsscheibe mit einem Reibring von mindestens 250 mm Außendurchmesser können durch die vorgeschlagene Konstruktion zumindest acht Ringsegmente angeordnet werden, die fertigungstechnisch günstig als Gleichteile ausgebildet sein können, die eine robuste Konstruktion bei zuverlässigem Spannungsaugleich sicherstellen und die aufgrund der radialen Ausrichtung der Stoßstellen zugleich Wasserableitungsnuten bilden.

Ein Ausführungsbeispiel der Erfindung ist im folgenden mit weiteren Einzelheiten näher erläutert. Die schematische Zeichnung zeigt in
- Fig. 1: einen Abschnitt einer Bremsscheibe für eine Scheibenbremse für Kraftfahrzeuge mit im Stoßbereich der Ringsegmente aufgebrochener Darstellung der Haltebolzen;
- Fig. 2: einen Schnitt entlang der Linie II-II der Fig. 1 durch einen Stoßbereich zweier Ringsegmente; und

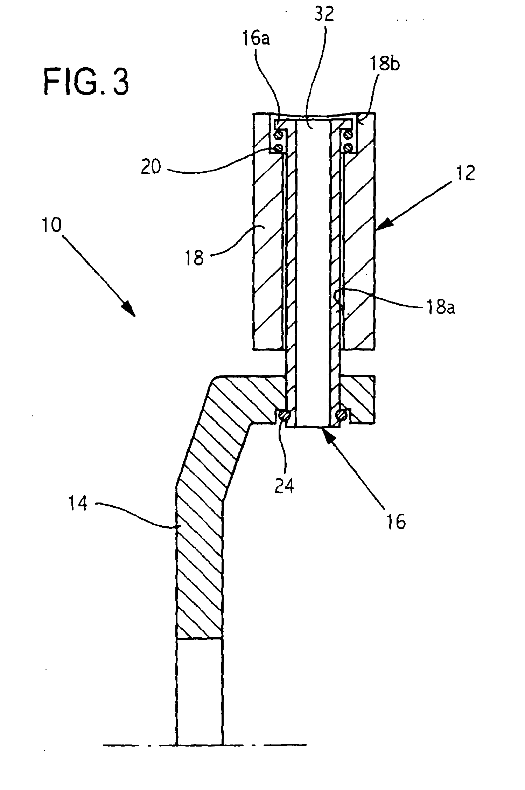

- Fig. 3: einen weiteren Schnitt gemäß Linie III-III der Fig. 1 entlang einer Stoßstelle in der Mittelachse des Haltebolzens.

Die nur abschnittsweise dargestellte, rotationssymmetrische Bremsscheibe 10 für eine Scheibenbremse in Kraftfahrzeugen setzt sich im wesentlichen zusammen aus einem Reibring 12 aus Gussstahl oder Keramik, einem topfförmigen Tragteil 14 aus tiefziehfähigem Stahl und mehreren rohrförmigen Haltebolzen 16 ebenfalls aus Stahl, die den Reibring 12 mit dem Tragteil 14 verbinden.

Der Reibring 12 besteht aus mehreren Ringsegmenten 18, im Ausführungsbeispiel bei einem Außendurchmesser der Bremsscheibe 10 von ca. 300 mm von zwölf Ringsegmenten 18.

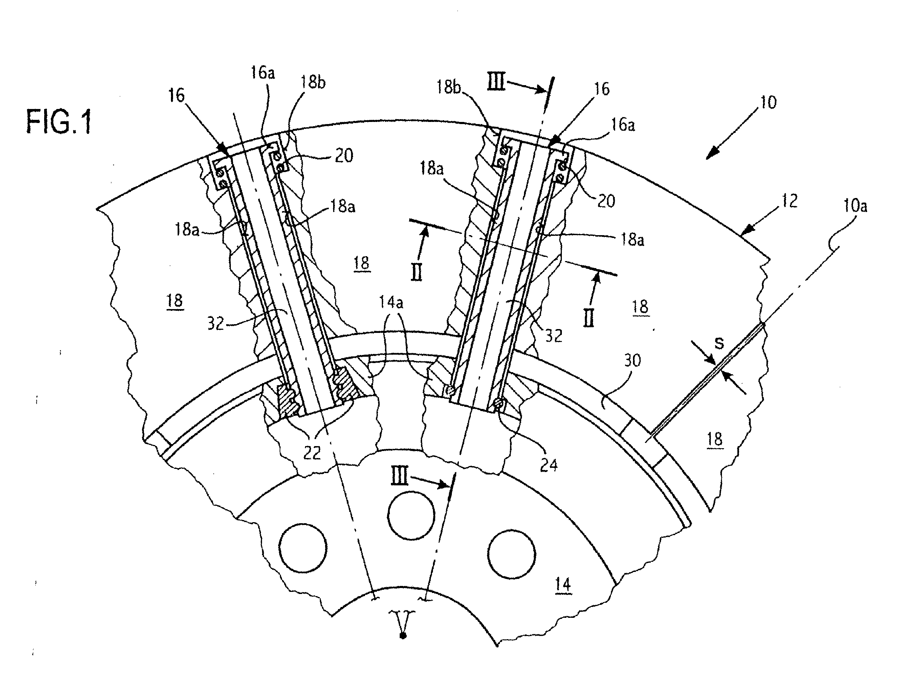

Ein jedes Ringsegment 18 weist an seinen beidseitigen Stoßbereichen (Teilungslinien 10a der Fig. 1) halbkreisförmige, radial verlaufende Ausnehmungen 18a auf, die die jeweiligen Haltebolzen 16 um nahezu deren halben Außenumfang umschließen. An den Stoßstellen 10a verbleiben dabei an beiden Reibseiten der Reibscheibe 12 geringe, radial verlaufende Spalte s, die einen unmittelbaren Kontakt der Ringsegmente 18 untereinander ausschließen und zugleich Wasser- oder Bremsabrieb-Abführungsnuten bilden.

Die Ausnehmungen 18a sind im radial äußeren Abschnitt 18b zur Aufnahme jeweils einer kurzen Schraubendruckfeder 20 und eines ringschulterförmigen Kopfabschnittes 16a der Haltebolzen 16 erweitert.

Ferner sind die Haltebolzen 16 radial innenliegend über Sicherungsmittel an Umfangsabschnitten 14a des Tragteils 14 formschlüssig befestigt. Die Sicherungsmittel können halbkreisförmige Keile 22 oder federnde Stahlringe 24 sein, die in entsprechenden nutförmigen oder konusförmigen Vertiefungen der Haltebolzen 16 und der Umfangsabschnitte 14a, wie auf der Zeichnung ersichtlich, formschlüssig eingreifen.

Die Verbindung durch die Haltebolzen 16 wird dabei durch die temperaturfesten (und korrosionsbeständigen) Schraubendruckfedern 20 (oder durch entsprechende Tellerfedern) radial unter Vorspannung gehalten; trotzdem können die Ringsegmente 18 bei starken Temperaturänderungen am Reibring 12 unter geringfügiger Kompression der Schraubendruckfedern 20 radial nach außen sich verschieben und somit unzulässige Materialspannungen abbauen. Verwerfungen oder Aufschirmungen der Bremsscheibe 10 sind dadurch weitgehendst vermieden.

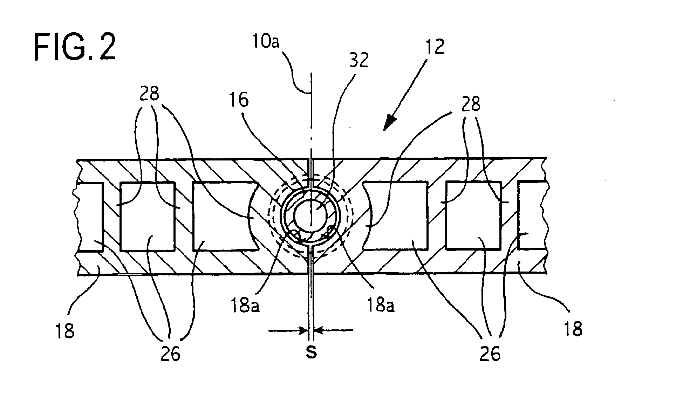

In den Ringsegmenten 18 (vgl. Fig. 2) sind jeweils mehrere radial verlaufende Kühlkanäle 26 mit dazwischen befindlichen Verbindungsstegen 28 ausgebildet. Die Kühlkanäle 26 münden radial innen in einen ringförmigen Lüftungsspalt 30, der zwischen den Umfangsabschnitten 14a des Tragteils 14 bzw. zwischen dessen Außenumfang und den Ringsegmenten 18 bzw. deren Innenumfang gebildet ist.

Weitere Kühlkanäle 32 sind durch die rohrförmigen Haltebolzen 16 gebildet, die unter Überbrückung des Lüftungsspaltes 30 radial innenliegend in das topfförmige Tragteil 14 münden.

Zur Optimierung der Reibverhältnisse und zur Vermeidung von Korrosion sind die Haltebolzen 16 zumindest an ihren Kontaktflächen zu den Ringsegmenten 18 mit einer PVD-Beschichtung (Physical Vapour Deposition) aus Zᵣ₂O₅ versehen.

## Patentansprüche

1. Bremsscheibe für eine Scheibenbremse, insbesondere in Kraftfahrzeugen, mit einem Reibring (12) und einem topfförmigen Tragteil (14), wobei der Reibring (12) aus mehreren, in Umfangsrichtung aneinander anschließenden Ringsegmenten (18) besteht, **dadurch gekennzeichnet, dass**
- die Ringsegmente (18) im Stoßbereich (10a) jeweils etwa hälftig radial verlaufende Haltebolzen (16) umschließen,
- die Haltebolzen(16) in Umfangsabschnitten (14a) des Tragteils (14) befestigt sind, und
- die Haltebolzen (16) in Zentrifugalrichtung die Ringsegmente (18) formschlüssig abstützen.

2. Bremsscheibe nach Anspruch 1, **dadurch gekennzeichnet, dass** die Haltebolzen (16) in den Umfangsabschnitten (14a) des Tragteils (14) durch formschlüssig wirkende Sicherungsmittel (22,24) gehalten sind.

3. Bremsscheibe nach Anspruch 2, **dadurch gekennzeichnet, dass** die Sicherungsmittel formschlüssig in die Haltebolzen (16) und in die Umfangsabschnitte (14a) eingreifende, halbkreisförmige Keile (22) sind.

4. Bremsscheibe nach einem der Ansprüche 1 bis 3, **dadurch gekennzeichnet, dass** die Haltebolzen (16) radial außen liegend mit Kopfabschnitten (16a) versehen sind, die die Ringsegmente (18) formschlüssig abstützen.

5. Bremsscheibe nach einem der Ansprüche 1 bis 4, **dadurch gekennzeichnet, dass** die Ringsegmente (18) durch Zwischenschaltung von Federn (20) in Zentrifugalrichtung begrenzt federnd nachgiebig gehalten sind.

6. Bremsscheibe nach einem der Ansprüche 1 bis 5, **dadurch gekennzeichnet, dass** die Haltebolzen (16) und die korrespondierenden Ausnehmungen (18a) im Stoßbereich (10a) der Ringsegmente (18) rotationssymmetrisch sind.

7. Bremsscheibe nach einem der Ansprüche 1 bis 6, **dadurch gekennzeichnet, dass** die Haltebolzen (16) rohrförmig ausgeführt sind.

8. Bremsscheibe nach einem der Ansprüche 1 bis 7, **dadurch gekennzeichnet, dass** die Haltebolzen (16) mit einer schützenden Beschichtung versehen sind.

9. Bremsscheibe nach Anspruch 8, **dadurch gekennzeichnet, dass** die Beschichtung eine PVD Beschichtung aus insbesondere Zᵣ₂O₅ ist.

10. Bremsscheibe nach einem der Ansprüche 1 bis 9, **dadurch gekennzeichnet, dass** der Reibring (12) innenbelüftet mit radial verlaufenden Kühlkanälen (26) in den Ringsegmenten (18) ausgebildet ist und dass zwischen den Umfangsabschnitten (14a) des Tragteils (14) und den Ringsegmenten (18) ein ringförmiger Lüftungsspalt (30) vorgesehen ist.

11. Bremsscheibe nach einem der Ansprüche 1 bis 10, **dadurch gekennzeichnet, dass** bei einem Außendurchmesser des Reibringes (12) von mindestens 250 mm mindestens acht Ringsegmente (18) angeordnet sind.

## Claims

1. Brake disc for a brake plate, particularly in vehicles, with a friction ring (12) and a cup-shaped support section (14), whereby the friction ring (12) comprises several ring segments adjoining each other in the peripheral direction, **characterized in that**,
- in the area of impact (10a), the ring segments (18) in each case enclose approximately half of the radial connecting pins (16),
- the connecting pins (16) are attached into the peripheral sections (14a) of the support section (14),
- the connecting pins (16) give form-locking support, in the centrifugal direction, for ring segments (18).

2. Brake disc in accordance with claim 1, **characterized in that** the connecting pins (16) are held, in the peripheral sections (14a) of the support section (14), by means of securing means (22, 24) acting by means of form-locking.

3. Brake disc in accordance with claim 2, **characterized in that** the securing means are semi-circular liners (22) engaging in the connecting pins (16) through form-locking and also engaging in the peripheral sections (14a).

4. Brake disc in accordance with one of claims 1 to 3, **characterized in that** the connecting pins (16) have head sections (16a), lying towards the outside in a radial direction, that support the ring segments (18) through form-locking.

5. Brake disc in accordance with one of claims 1 to 4, **characterized in that** the ring segments (18) are held such that they are yieldingly sprung, in a centrifugal direction, by the interposition of springs (20).

6. Brake disc in accordance with one of claims 1 to 5, **characterized in that** the connecting pins (16) and the corresponding recesses (18a) are rotationally symmetrical in the area of impact (10a) of the ring segments (18).

7. Brake disc in accordance with one of claims 1 to 6, **characterized in that** the connecting pins (16) are tubular.

8. Brake disc in accordance with one of claims 1 to 7, **characterized in that** the connecting pins (16) are provided with a protective coating.

9. Brake disc in accordance with claim 8, **characterized in that** the coating is a polyvinylidene, one of, in particular, Zr₂O₅.

10. Brake disc in accordance with one of claims 1 to 9, **characterized in that** the friction ring (12) is internally ventilated by means of radial cooling channels (26) in the ring segments (18) and **in that** there is an annular ventilation gap (30) between the peripheral sections (14a) of the support section (14) and the ring segments (18).

11. Brake disc in accordance with one of claims 1 to 10, **characterized in that**, for an outer diameter of the friction ring (12) of 250 mm, there are at least eight ring segments (18).

## Revendications

1. Disque de frein pour un frein à disque, en particulier dans les automobiles, avec une bague de friction (12) et une partie porteuse en forme de pot (14) dans lequel la bague de friction (12) se compose de plusieurs segments annulaires (18) raccordés les uns aux autres dans le sens périphérique, **caractérisé en ce que** :
- les segments annulaires (18) dans la zone de jointure (10a) entourent chaque fois des boulons de retenue (16) dirigés à peu près à moitié radialement,
- les boulons de retenue (16) sont fixés dans les sections périphériques (14a) de la partie porteuse (14), et
- les boulons de retenue (16) supportent mécaniquement les segments annulaires (18) dans le sens centrifuge.

2. Disque de frein selon la revendication 1, **caractérisé en ce que** les boulons de retenue (16) sont maintenus dans les sections périphériques (14a) de la partie porteuse (14) par des dispositifs de fixation (22, 24) agissant mécaniquement.

3. Disque de frein selon la revendication 2, **caractérisé en ce que** les dispositifs de fixation sont des clavettes en forme de demi-cercle (22) s'engrenant mécaniquement dans les boulons de retenue (16) et dans les sections périphériques (14a).

4. Disque de frein selon l'une des revendications 1 à 3, **caractérisé en ce que** les boulons de retenue (16) sont équipés radialement à l'extérieur de segments de tête (16a) qui soutiennent mécaniquement les segments annulaires (18).

5. Disque de frein selon l'une des revendications 1 à 4, **caractérisé en ce que** les segments annulaires (18) sont maintenus souples en intercalant des ressorts (20) limités élastiquement dans le sens centrifuge.

6. Disque de frein selon l'une des revendications 1 à 5, **caractérisé en ce que** les boulons de retenue (16) et les évidements correspondants (18a) sont symétriques en rotation dans la zone de jointure (10a) des segments annulaires (18).

7. Disque de frein selon l'une des revendications 1 à 6, **caractérisé en ce que** les boulons de retenue (16) sont réalisés en forme de tuyau.

8. Disque de frein selon l'une des revendications 1 à 7, **caractérisé en ce que** les boulons de retenue (16) sont équipés d'un revêtement de protection.

9. Disque de frein selon la revendication 8, **caractérisé en ce que** le revêtement d'un enduit PVD est notamment en Zr₂O₅.

10. Disque de frein selon l'une des revendications 1 à 9, **caractérisé en ce que** la bague de friction (12) est configurée aérée intérieurement avec des canaux d'aération (26) passant radialement dans les segments périphériques (18) et qu'entre les sections périphériques (14a) de la partie porteuse (14) et les segments annulaires (18), une fente d'aération en forme d'anneau (30)est prévue.

11. Disque de frein selon l'une des revendications 1 à 10, **caractérisé en ce que** dans le cas d'un diamètre extérieur de la bague de friction (12) d'au moins 250 mm sont disposés au moins huit segments annulaires (18).
